# EUROPEAN PATENT APPLICATION

(11) **EP 0 816 399 A1**
(43) Date of publication of application: **07.01.1998**
(21) Application number: 97110704.0
(22) Date of filing: 01.07.1997
(51) Int. Cl.: C08F 210/16

(54) **Slurry process for the preparation of elastomeric ethylene copolymers**

(30) Priority: 02.07.1996 IT MI961350
(71) Applicant: Montell Technology Company bv, 2132 MS Hoofddorp (NL)
(72) Inventor: Galimberti, Maurizio, 20137 Milano (IT); Baruzzi, Giovanni, 44100 Ferrara (IT)
(74) Representative: Zanoli, Enrico

(57) **Abstract**

Process for the preparation of elastomeric ethylene copolymers containing from 45 to 80% by weight of units derived from ethylene, said process comprising the slurry-polymerization reaction of a mixture comprising ethylene, propylene and optionally a polyene, carried out in the presence of a catalytic system comprising a compound of a transition metal M containing at least one M-π bond; the said process being characterized by the presence, in the reaction medium, of a low-boiling saturated hydrocarbon solvent.

The use of the hydrocarbon solvent has the advantage of stabilizing the slurry over a wide temperature and composition range, thereby preventing fouling of the reactor.

## Description

The present invention relates to the process for the preparation of ethylene copolymers, and more particularly relates to a slurry process for the preparation of elastomeric ethylene copolymers.
Elastomeric ethylene copolymers, which are produced on an industrial scale, are ethylene/propylene (EPM) elastomers optionally containing smaller proportions of dienes (EPDM). The said elastomers are produced industrially by solution processes or slurry processes carried out, for example, in the presence of Ziegler-Natta type catalysts based on vanadium compounds such as vanadium oxychloride or vanadium acetylacetonate.

In the solution processes, the comonomers are dissolved in a solvent, generally hexane, in which the polymer which forms is soluble.

In the slurry processes, the reaction medium consists essentially of liquid olefins, and the polymer which forms as a solid precipitate remains suspended in the liquid phase.

Slurry processes have many advantages over solution processes, namely:
- absence of the stirring problems associated with the viscosity of the reaction medium;
- easier removal of the heat of reaction;
- higher productivity of the reactor owing to the higher concentration of polymer in the reaction medium;
- higher polymerization yields;
- ability to produce high-molecular-weight polymers;
- energy saving as regards recovery of the polymer;
- lower investment and production costs.

However, a considerable drawback with slurry processes is the adhesive property of the rubberry material. This is because the solid polymer particles have a tendency to stick to one another or to the stirrer, or to the walls of the reactor. This phenomenon is the cause of fouling problems in the reactor and thereby considerably reduces the diffusion of the monomers in the reaction medium, thus making it very difficult to prepare the polymer and reducing its quality.

In order to overcome this drawback, a solvent can be added to the reaction medium.

Only aromatic solvents such as toluene or high-boiling aliphatic solvents such as cyclohexane are used for this purpose. It has also been proposed to use chlorinated solvents.

The approaches adopted in the prior art are, however, of little practical value since they have certain drawbacks which limit their use: aromatic solvents are highly toxic, the use of chlorinated solvents gives rise to a release of chlorine in the polymer, whilst high-boiling solvents are difficult to remove from the polymer at the purification stage.

Another approach which has been proposed in order to make the slurry processes possible is to introduce antistatic agents into the polymerization reactor. However, this approach is not entirely satisfactory and moreover has the disadvantage of introducing undesired compounds into the final product.

More recently, processes have been proposed for the preparation of elastomeric ethylene copolymers, these processes being carried out in the presence of homogeneous catalysts based on metallocene compounds.

European patent application EP 347,128 describes a process for the preparation of elastomeric ethylene/propylene copolymers in slurry, using a catalytic system consisting of a zirconocene and methylaluminoxane supported on silica gel. It is necessary for the catalyst to be supported and prepolymerized with ethylene or another α-olefin, otherwise fouling of the reactor inevitably takes place.

European patent application EP 535,230 proposes a slurry process for the preparation of ethylene/α-olefin copolymers which is free of fouling phenomena. This process is carried out in the presence of a catalytic system comprising a zirconocene and methylaluminoxane supported on silica gel, and a polysiloxane additive. In the comparative examples, in which no polysiloxane was used, clogging and blocking of the reactor are observed.

European patent application EP 643,079 describes a process for the preparation of elastomeric ethylene copolymers comprising the slurry polymerization, carried out in the presence of a metallocene catalyst, of a mixture comprising ethylene, propylene and at least 15% by weight of an α-olefin of formula CH₂=CHR, in which R is an alkyl radical having from 2 to 10 carbon atoms. This process does not cause fouling of the reactor, but the use of a further α-olefin in the reaction medium does not allow elastomeric copolymers consisting of ethylene/propylene or ethylene/propylene/diene to be produced.

There is thus a need for a slurry process for the production of elastomeric ethylene/propylene copolymers which does not cause fouling, does not introduce the drawbacks mentioned above and moreover allows easy recovery of the polymer at the end of the process.

It has now been found, unexpectedly, that it is possible to prepare elastomeric ethylene/propylene or ethylene/propylene/polyene copolymers by means of a slurry process which does not cause fouling of the reactor and is free of the other drawbacks of the prior art, by adding a low-boiling saturated hydrocarbon solvent to the reaction medium comprising a mixture of liquid propylene, ethylene and optionally a polyene.

In particular, the use of a low-boiling saturated hydrocarbon solvent has the advantage of stabilizing the slurry over a wide temperature and composition range without any of the problems described above being encountered.

The subject of the present invention is therefore a process for the preparation of elastomeric ethylene copolymers containing from 45 to 80% by weight of units derived from ethylene, from 20 to 55% by weight of units derived from propylene and from 0 to 15% by weight of units derived from a polyene, comprising the slurry-polymerization reaction of a mixture comprising ethylene, propylene and optionally a polyene, carried out in the presence of a catalytic system comprising a compound of a transition metal M selected from Ti, V, Zr and Hf containing at least one M-π bond, at a temperature of between 20 and 90°C, the said process being characterized by the presence in the reaction medium of a saturated hydrocarbon solvent having between 5 and 9 carbon atoms and having a boiling point lower than that of cyclohexane, the said hydrocarbon being present in amounts of between 5 and 60% by weight relative to the total weight of the liquid phase. Preferably, these amounts are between 10 and 50% and more preferably between 15 and 40% by weight.

By working within the amounts of aliphatic hydrocarbon reported above, it is possible to obtain very good results in terms of reduction of the fouling throughout the polymerization temperature range and polymer composition range. In particular, excellent results in terms of reduction of the fouling and implementation of the process can readily be obtained by appropriately selecting, on the basis of the knowledge of the behaviour of dispersed systems, the preferred amounts of solvent within the range given above.

In particular, in accordance with what is known in the prior art with respect to the interactions between solute and solvent in a dispersed system, it will be clear to those skilled in the art that, for elastomeric copolymers having relatively low ethylene contents and/or relatively low molecular weights, which are therefore inclined to be more soluble, small amounts of solvent will generally be needed at a given polymerization temperature. On the other hand, larger amounts will generally be required for polymers which tend to be less soluble such as those having high contents of ethylene units and/or high molecular weights.

Moreover, as can readily be deduced by those skilled in the art, in the case of a process for obtaining an elastomeric copolymer having a given composition, higher polymerization temperatures will require smaller amounts of solvent in order to obtain a stable slurry.

Similarly, factors such as polymerization temperature, amount and type of solvent can be modified during the process, whilst remaining within the ranges given above, if, depending on possible variations regarding, for example, the composition or molecular weight of the polymer, a modification of the solvent power of the reaction medium is required.

In particular, but without wishing to limit the spirit of the invention, it has been found that when the polymerization is carried out at about 50°C, a stable slurry is obtained by using amounts of aliphatic hydrocarbon in the reaction medium of between 10 and 50% and preferably of between 20 and 40% by weight relative to the total weight of the liquid phase.

Among the hydrocarbon solvents which can be used in the process of the present invention, the preferred ones are n-pentane, isopentane, neopentane, n-hexane, isohexane, 3-methylpentane, 2,2-dimethylbutane, 2,3-dimethylbutane and cyclopentane. Among these, n-hexane and n-pentane are particularly preferred.

The elastomeric copolymers obtained by the process of the present invention preferably contain from 45 to 70% and more preferably from 50 to 65% by weight of ethylene units. The said copolymers moreover preferably contain from 30 to 55%, more preferably from 35 to 50%, by weight of propylene units and preferably from 1 to 10% by weight of polyene-derived units. The said elastomeric copolymers moreover have an intrinsic viscosity [η] of between 1 and 6 dl/g, more preferably of between 2 and 5 dl/g.

Polyenes which can be used in the process of the present invention include:
(a) polyenes capable of giving unsaturated units, such as:
   - unconjugated linear dienes such as trans-1,4-hexadiene, cis-1,4-hexadiene, 6-methyl-1,5-heptadiene, 3,7-dimethyl-1,6-octadiene, 11-methyl-1,10-dodecadiene, 5,6-dimethyl-1,6-octadiene, 7-methyl-1,6-octadiene;
   - monocyclic diolefins such as, for example, cis-1,5-cyclooctadiene and 5-methyl-1,5-cyclooctadiene;
   - bicyclic diolefins such as, for example, 4,5,8,9-tetrahydroindene and 6- and/or 7-methyl-4,5,8,9-tetrahydroindene;
   - alkenyl or alkylidene norbornenes such as, for example, 5-ethylidene-2-norbornene, 5-isopropylidene-2-norbornene, exo-5-isopropenyl-2-norbornene and 5-vinyl-2-norbornene;
   - polycyclic diolefins such as, for example, dicyclopentadiene, tricyclo[6.2.1.0^{2,7}]-4,9-undecadiene and the 4-methyl derivative thereof;
(b) unconjugated diolefins capable of cyclopolymerization, such as 1,5-hexadiene, 1,6-hepta-diene and 2-methyl-1,5-hexadiene;
(c) conjugated dienes such as, for example, butadiene and isoprene.

Catalytic systems which are suitable for use in the process of the present invention include:
(A) a compound of a transition metal M selected from Ti, V, Zr and Hf containing at least one metal-π bond; and
(B) a co-catalyst selected from an aluminoxane or another compound capable of forming a metal-alkyl cation.
Compound (A) is preferably selected from those comprising at least one ligand L coordinated to the metal M with a mono- or polycyclic structure having conjugated π-electrons. The said Ti, V, Zr or Hf compound is preferably selected from metallocene components having the structure:

Cp^{I}MR¹ₐR²_{b}R³_{c} (I)

Cp^{I}Cp^{II}MR¹ₐR²_{b} (II)

(Cp^{I}-Aₑ-Cp^{II})M¹R¹ₐR²_{b} (III)

in which M is Ti, V, Zr or Hf; Cp^{I} and Cp^{II}, which can be identical or different, are cyclopentadienyl groups which can be substituted;
two or more substituents on the said cyclopentadienyl groups can form one or more rings having from 4 to 6 carbon atoms;
R¹, R² and R³, which can be identical or different, are hydrogen or halogen atoms, an alkyl or alkoxy group with 1 - 20 carbon atoms, an aryl, alkylaryl or arylalkyl group with 6 - 20 carbon atoms, an acyloxy group with 1 - 20 carbon atoms, an allylic group or a substituent containing a silicon atom;
A is an alkenyl bridge or has a structure selected from: 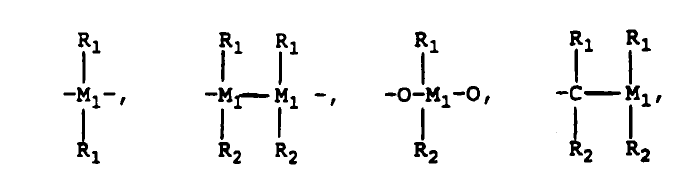 **=BR**_{**1**}**, =AlR**_{**1**}**,** -Ge-, -Sn-, -O-, -S-, =SO, =SO₂, =NR₁, =PR₁, =P(O)R₁, in which M₁ is Si, Ge or Sn; R₁ and R₂, which can be identical or different, are alkyl groups with 1 - 4 carbon atoms or aryl groups with 6 - 10 carbon atoms; a, b and c are, independently, integers from 0 to 4; e is an integer from 1 to 6 and two or more of the radicals R¹, R² and R³ can form a ring. In the case where the group Cp is substituted, the substituent is preferably an alkyl group with 1 - 20 carbon atoms.
Representative compounds having the formula (I) include: (Me₅Cp)MMe₃, (Me₅Cp)M(OMe)₃, (Me₅Cp)MCl₃, (Cp)MCl₃, (Cp)MMe₃, (MeCp)MMe₃, (Me₃Cp)MMe₃, (Me₄Cp)MCl₃, (Ind)MBenz₃, (H₄Ind)MBenz₃, (Cp)MBu₃, (Ind)MCl₃.
Representative compounds having the formula (II) include: (Cp)₂MMe₂, (Cp)₂MPh₂, (Cp)₂MEt₂, (Cp)₂MCl₂, (Cp)₂M(OMe)₂, (Cp)₂M(OMe)Cl, (MeCp)₂MCl₂, (Me₅Cp)₂MCl₂, (Me₅Cp)₂MMe₂, (Me₅Cp)₂MMeCl, (Cp)(Me₅Cp)MCl₂, (1-MeFlu)₂MCl₂, (BuCp)₂MCl₂, (Me₃Cp)₂MCl₂, (Me₄Cp)₂MCl₂, (Me₅Cp)₂M(OMe)₂, (Me₅Cp)₂M(OH)Cl, (Me₅Cp)₂M(OH)₂, (Me₅Cp)₂M(C₆H₅)₂, (Me₅Cp)₂M(CH₃)Cl, (EtMe₄Cp)₂MCl₂, [(C₆H₅)Me₄Cp]₂MCl₂, (Et₅Cp)₂MCl₂, (Me₅Cp)₂M(C₆H₅)Cl, (Ind)₂MCl₂, (Ind)₂MMe₂, (H₄Ind)₂MCl₂, (H₄Ind)₂MMe₂, {[Si(CH₃)₃]Cp}₂MCl₂, {[Si(CH₃)₃]₂Cp}₂MCl₂, (Me₄Cp)(Me₅Cp)MCl₂.
Representative compounds of formula (III) include: C₂H₄(Ind)₂MCl₂, C₂H₄(Ind)₂MMe₂, C₂H₄(H₄Ind)₂MCl₂, C₂H₄(H₄Ind)₂MMe₂, Me₂Si(Me₄Cp)₂MCl₂, Me₂Si(Me₄Cp)₂MMe₂, Me₂SiCp₂MCl₂, Me₂SiCp₂MMe₂, Me₂Si(Me₄Cp)₂MMeOMe, Me₂Si(Flu)₂MCl₂, Me₂Si(2-Et-5-iPrCp)₂MCl₂, Me₂Si(H₄Ind)₂MCl₂, Me₂Si(H₄Flu)₂MCl₂, Me₂SiCH₂(Ind)₂MCl₂, Me₂Si(2-Me-H₄Ind)₂MCl₂, Me₂Si(2-MeInd)₂MCl₂, Me₂Si(2-Et-5-iPrCP)₂MCl₂, Me₂Si(2-Me-5-EtCp)₂MCl₂, Me₂Si(2-Me-5-Me-Cp)₂MCl₂, Me₂Si(2-Me-4,5-benzoindenyl)₂MCl₂, Me₂Si(4,5-benzoindenyl)₂MCl₂, Me₂Si(2-EtInd)₂MCl₂, Me₂Si(2-iPr-Ind)₂MCl₂, Me₂Si(2-t-butyl-Ind)MCl₂, Me₂Si(3-t-butyl-5-MeCp)₂MCl₂, Me₂Si(3-t-butyl-5-MeCp)₂MMe₂, Me₂Si(2-MeInd)₂MCl₂, C₂H₄(2-Me-4,5-benzoindenyl)₂MCl₂, Me₂C(Flu)CpMCl₂, Ph₂Si(Ind)₂MCl₂, Ph(Me)Si(Ind)₂MCl₂, C₂H₄(H₄Ind)M(NMe₂)OMe, Isopropylidene-(3-t-butylCp)(Flu)MCl₂, Me₂C(Me₄Cp)(MeCp)MCl₂, MeSi(Ind)₂MCl₂, Me₂Si(Ind)₂MMe₂, Me₂Si(Me₄Cp)₂MCl(OEt), C₂H₄(Ind)₂M(NMe₂)₂, C₂H₄(Me₄Cp)₂MCl₂, C₂Me₄(Ind)₂MCl₂, Me₂Si(3-Me-Ind)₂MCl₂, C₂H₄(2-Me-Ind)₂MCl₂, C₂H₄(3-Me-Ind)₂MCl₂, C₂H₄(4,7-Me₂-Ind)₂MCl₂, C₂H₄(5,6-Me₂-Ind)₂MCl₂, C₂H₄(2,4,7-Me₃Ind)₂MCl₂, C₂H₄(3,4,7-Me₃Ind)₂MCl₂, C₂H₄(2-Me-H₄Ind)₂MCl₂, C₂H₄(4,7-Me₂-H₄Ind)₂MCl₂, C₂H₄(2,4,7-Me₃-H₄Ind)₂MCl₂, Me₂Si(4,7-Me₂-Ind)₂MCl₂, Me₂Si(5,6-Me₂-Ind)₂MCl₂, Me₂Si(2,4,7-Me₃-H₄Ind)₂MCl₂.
In the formulae described above, the symbols have the following meanings:
Me = methyl, Et = ethyl, iPr = isopropyl, Bu = butyl, Ph = phenyl, Cp = cyclopentadienyl, Ind = indenyl, H₄Ind = 4,5,6,7-tetrahydroindienyl, Flu = fluorenyl, Benz = benzyl, M = Ti, Zr or Hf, preferably Zr.

Compound (A) can moreover be selected from mono-cyclopentadienyl compounds of the "constrained geometry" type described, for example, in European patent applications EP-416,815, EP-420,436 and EP-520,732.

Aluminoxane compounds which can be used as co-catalysts (B) for the catalytic system according to the invention are, for example, linear, branched or cyclic aluminoxanes containing at least one group of the type (IV): 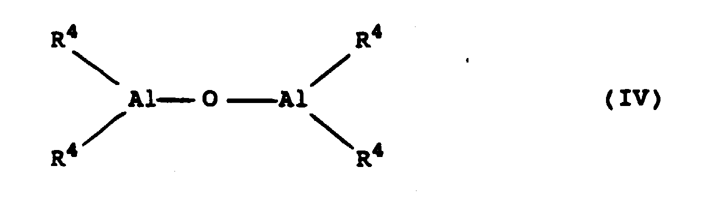 where the substituents R⁴, which can be identical or different, are a linear or branched alkyl group with 1 - 20 carbon atoms, and aryl, alkylaryl or arylalkyl group with 6 - 20 carbon atoms, an acyloxy group with 1 - 20 carbon atoms, an allylic group or a group -O-Al(R⁴)₂, and optionally certain groups R⁴ can be halogen or hydrogen atoms.

In particular, aluminoxanes of formula (V) can be used: 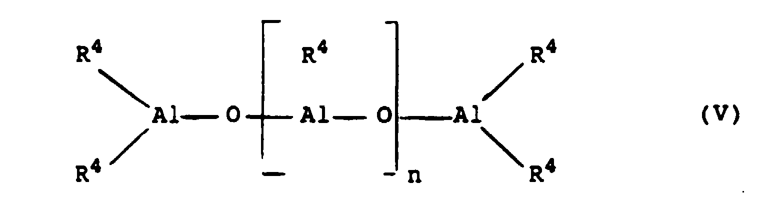 in the case of linear compounds, where n is 0 or an integer between 1 and 40, or alternatively aluminoxanes of formula (VI): 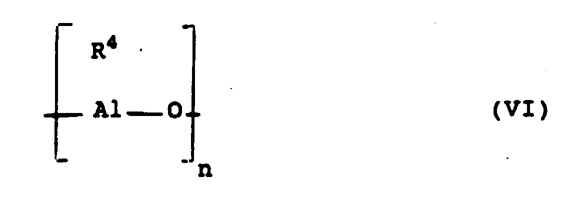 in the case of cyclic compounds, where n is an integer between 2 and 40.

The radicals R⁴ are preferably methyl, ethyl, isobutyl and 2,2,4-trimethylpentyl. Examples of aluminoxanes which are suitable for use according to the present invention are methylaluminoxane (MAO), tetraisobutyldialuminoxane (TIBAO) and tetra-2,2,4-trimethylpentyldialuminoxane (TIOAO).

One particular class of aluminium compounds which can be used as co-catalysts (B) in the catalytic system according to the invention is that of compounds which can be obtained by reacting alkylaluminiums or alkylaluminium hydrides of formula AlH_{z}R⁴_{3-z}, where z is from 0 to 2, with water in a molar ratio of between 1:1 and 100:1 respectively. Compounds of this type are described in European patent application EP 575,875 and in international patent application WO 96/02580.

The molar ratio between the aluminium and the metal of the compound (A) is generally between about 10:1 and about 10000:1 and preferably between about 100:1 and about 5000:1.

The compounds capable of forming an alkylmetal cation, which can be used as co-catalysts (B), are compounds of formula Y⁺Z⁻, where Y⁺ is a Brönsted acid, which is capable of donating a proton and of reacting irreversibly with a substituent R¹,R² or R³ of the compounds of formulae (I), (II) and (III), and Z⁻ is a compatible, non-coordinating anion which is capable of stabilizing the active catalytic species, and which is sufficiently labile to be displaceable from an olefinic substrate. Preferably, the anion Z⁻ comprises one or more boron atoms. More preferably, the anion Z⁻ is an anion of formula BAr₄⁽⁻⁾, where the substituents Ar, which can be identical or different, are aryl radicals such as phenyl, pentafluorophenyl or bis(trifluoromethyl)phenyl. Tetrakis(pentafluorophenyl)borate is particularly preferred. Moreover, compounds of formula BAr₃ can conveniently be used. Examples of this type are described, for example, in the international patent application WO 92/00333.

In the catalytic system according to the present invention, both the transition metal compound and the aluminoxane can be present as the products of the reaction with an organometallic aluminium compound of formula (III):

AlR⁴_{3-z}H_{z} (III)

in which the substituents R⁴, which can be identical or different, and z are defined as above.

Although it is not necessary for the purposes of avoiding fouling of the reactor, the catalysts used in the process of the present invention can also be used on inert supports so as to impart a given morphology to the final polymer. This is achieved by supporting compound (A), or the product of reacting the latter with the co-catalyst (B), or the co-catalyst (B) and subsequently the compound (A), on inert supports such as, for example, silica, alumina, styrene/divinylbenzene copolymers or polyethylene.

One particular class of porous inorganic supports which can be used in the process of the present invention is described in international patent application WO 95/32995.

Specific classes of porous organic supports which can be used in the process of the present invention are described in European patent application EP-633,272 and in international patent application WO 95/26369.

The components of the catalyst can be placed together prior to polymerization. The contact time is generally between 1 and 60 minutes, preferably between 5 and 20 minutes.

The polymerization process of the present invention can be carried out either continuously or discontinuously.

The polymerization temperature is generally between 20°C and 90°C, in particular between 30°C and 80°C and more particularly between 40°C and 60°C.

In one particular embodiment, the process of the present invention is carried out at temperatures of between 20 and 90°C in a mixture containing liquid propylene, dissolved ethylene gas and a saturated hydrocarbon selected from n-hexane and n-pentane in amounts of between 10 and 50% by weight, in the presence of a catalyst which comprises the product of reaction between:
(A) ethylenebis(4,5,6,7-tetrahydroindenyl)zirconium dichloride, and
(B) a compound selected from tetraisobutyldialuminoxane (TIBAO), tetra-2,2,4-trimethylpentyldialuminoxane (TIOAO) or the product of the reaction between triisobutylaluminium (TIBAL) or tri-2,2,4-trimethylpentylaluminium (TIOA) and water.

The amounts by weight of dissolved ethylene in the reaction mixture are generally between 8% and 45% and preferably between 10% and 20%, while the amount by weight of diene is generally between 0 and 5%. The balance to 100% consists of liquid propylene.

The elastomeric copolymers obtained by the process of the present invention can be vulcanized using the known recipes and methods for EPM and EPDM rubbers, working, for example, in the presence of peroxides or sulphur. Rubber products possessing valuable elastomeric properties are obtained.

The rubbers obtained from these copolymers can be converted into manufactured goods by the normal methods for processing thermoplastic materials (moulding, extrusion, injection, etc.). The corresponding manufactured goods have advantageous elastic properties and can be used in any of the typical applications of α-olefin elastomers.

The examples which follow are given by way of non-limiting illustration of the invention.

### CHARACTERIZATIONS

The proportions of propylene and of α-olefin in the copolymer were determined by ¹³C NMR analysis.

The ¹³C NMR analyses of the copolymers were carried out using a Bruker AC200 machine, at a temperature of 120°C, on samples prepared by dissolving about 300 mg of polymer in 2.5 cc of a 3:1 trichlorobenzene/C₂D₂Cl₄ mixture. The spectra were recorded with the following parameters:
- Relaxation delay = 12 sec,
- Number of scans = 2000 - 2500.

The intrinsic viscosity [η] was measured in tetralin at 135°C.

The differential scanning calorimetry (DSC) measurements were taken on a DSC-7 machine from Perkin Elmer Co. Ltd. according to the following procedure. About 10 mg of sample obtained from the polymerization were cooled to -25°C and then heated to 200°C at a scanning rate equal to 10°C/minute. The sample was kept at 200°C for 5 minutes and then cooled at a scanning rate equal to 10°C/minute. A second scanning run was then carried out according to the same methods as for the first scan. The values reported are those obtained in the first scan.

The molecular weight distribution was determined by GC carried out on a Waters 150 machine in ortho-dichlorobenzene at 135°C.

### EXAMPLES

### EXAMPLES 1 - 3

The amounts of water, ethylene, propylene and n-pentane given in Table 1 were introduced at room temperature into a 4.25 litre autoclave fitted with a stirrer, a manometer, a temperature indicator, a system for feeding the catalyst, monomer supply lines and a jacket for thermostatic regulation, the autoclave having been purged by flushing with ethylene at 80°C. The temperature was then brought to 5°C below the polymerization temperature. The catalyst solution was prepared as follows. A solution of triisobutylaluminium (TIBAL) in toluene (0.2 g TIBAL/cm³ of solution) was added to a solution of ethylenebis(4,5,6,7-tetrahydroindenyl)zirconium dichloride in toluene (2 cm³ of toluene/mg of metallocene). The solution was kept stirring at a temperature of 20°C for 5 minutes and was then injected into the autoclave under a pressure of ethylene/propylene mixture in a ratio such as to keep the composition in the reaction bath constant. The temperature was then brought rapidly to the desired level for the polymerization. The polymerization conditions are given in Table 1. No fouling was observed in the reactor. The polymer obtained was isolated by removal of the unreacted monomers and was then dried under vacuum. The data relating to the characterization of the polymer obtained are given in Table 2.

### COMPARATIVE EXAMPLE 4

The process was performed according to the procedure described in Example 1, but with a n-pentane content in the reaction mixture of less than 5%. The polymerization conditions are given in Table 1. The polymer was obtained as a single compacted mass in the reactor. The data relating to the characterization of the polymer obtained are given in Table 2.

### EXAMPLES 5 - 7

The process was performed according to the procedure described in Example 1, but using n-hexane instead of n-pentane. The polymerization conditions are given in Table 1. No fouling was observed in the reactor. The data relating to the characterization of the polymer obtained are given in Table 2.

### EXAMPLES 8 - 9

The amounts of water, ethylene, propylene and n-hexane given in Table 3 were introduced at room temperature into a 4.25 litre autoclave fitted with a stirrer, a manometer, a temperature indicator, a system for feeding the catalyst, monomer supply lines and a jacket for thermostatic regulation, the autoclave having been purged by flushing with ethylene at 80°C. The temperature was then brought to 5°C below the polymerization temperature. The catalyst solution was prepared as described in Example 1, except that tri-2,2,4-trimethylpentylaluminium (TIOA) was used instead of the TIBAL. The amounts used are given in Table 3. The solution, kept stirring at a temperature of 20°C for 5 minutes, was then injected into the autoclave under a pressure of ethylene/propylene mixture in a ratio such as to keep the composition in the reaction bath constant. The temperature was then brought rapidly to the desired level for the polymerization. The polymerization conditions are given in Table 3. No fouling was observed in the reactor. The polymer obtained was isolated by removal of the unreacted monomers and was then dried under vacuum. The data relating to the characterization of the polymer obtained are given in Table 4.

### EXAMPLE 10

The process was performed according to the procedure described in Examples 5 - 7, using bis(indenyl)zirconium dichloride in place of ethylenebis(4,5,6,7-tetrahydroindenyl)zirconium dichloride. The polymerization conditions are given in Table 3. No fouling was observed in the reactor. The data relating to the characterization of the polymer obtained are given in Table 4.

### COMPARATIVE EXAMPLE 11

The process was performed according to the procedure described in Example 10, but in the absence of aliphatic hydrocarbon. The polymer was obtained as a single compacted mass in the reactor. The data relating to the characterization of the polymer obtained are given in Table 4.

### EXAMPLE 12

The process was performed according to the procedure described in Examples 8 - 9, using bis(4,5,6,7-tetrahydroindenyl)zirconium dichloride in place of ethylenebis(4,5,6,7-tetrahydroindenyl)zirconium dichloride. The polymerization conditions are given in Table 3. No fouling was observed in the reactor. The data relating to the characterization of the polymer obtained are given in Table 4.

### COMPARATIVE EXAMPLE 13

The process was performed according to the procedure described in Example 12, but in the absence of aliphatic hydrocarbon. The polymer was obtained as a single compacted mass in the reactor. The data relating to the characterization of the polymer obtained are given in Table 4.

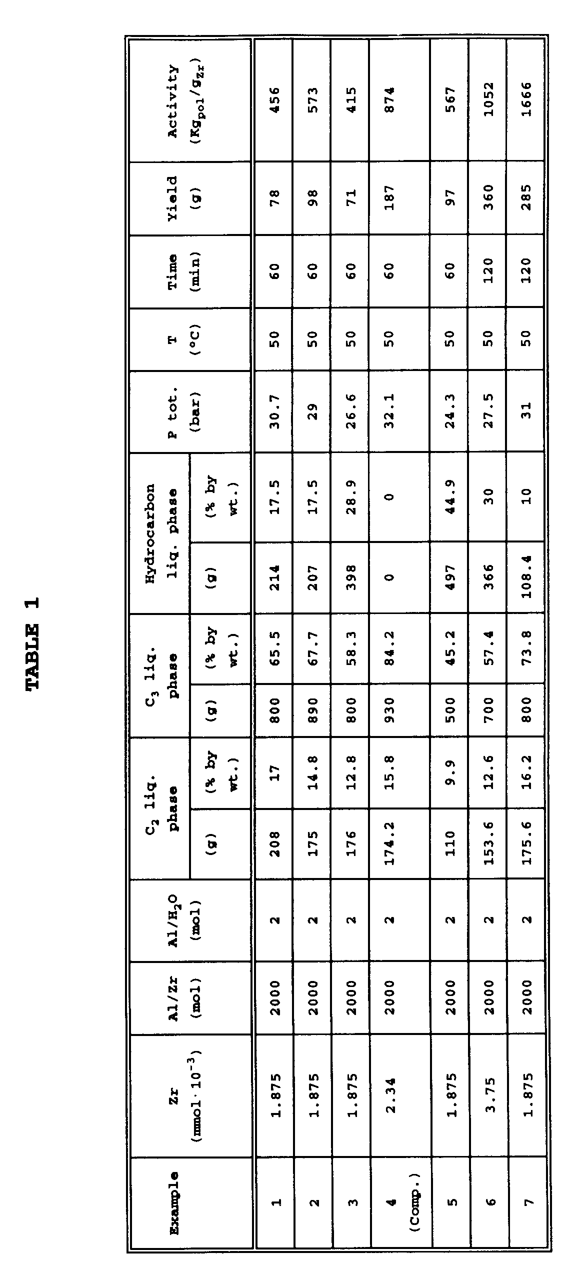

**TABLE 2**

| **Example** | **Ethylene (% by weight)** | **I.V. (dl/g)** | **M**_{**w**}**/M**_{**n**} | **D.S.C.** | |
|---|---|---|---|---|---|
| | | | | **T**_{**f**} **(°C)** | **ΔH**_{**f**} **(J/g)** |
| **1** | **72** | **7.1** | **n.d.** | **48.8** | **29.6** |
| **2** | **65.7** | **6.38** | **"** | **46.4** | **15.9** |
| **3** | **69.8** | **6.95** | **"** | **45.7** | **24.1** |
| **4 (Comp.)** | **60.2** | **4.8** | **"** | **60.2** | **4.8** |
| **5** | **71.1** | **7.26** | **"** | **50.8** | **35.9** |
| **6** | **65.3** | **4.40** | **4.2** | **n.d.** | **n.d.** |
| **7** | **58.6** | **5.45** | **3.3** | **43.5** | **8.5** |
| **n.d. = not determined** | | | | | |

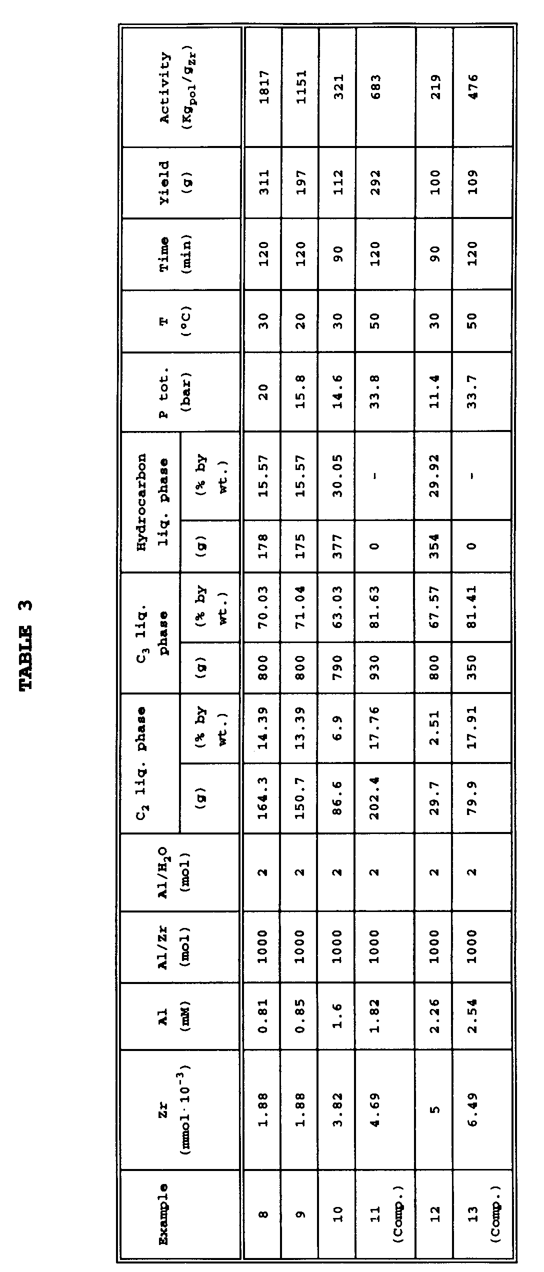

**TABLE 4**

| **Example** | **Ethylene (% by weight)** | **Propylene (% by weight)** | **I.V. (dl/g)** | **M**_{**w**}**/M**_{**n**} | **D.S.C.** | |
|---|---|---|---|---|---|---|
| | | | | | **T**_{**f**} **(°C)** | **ΔH**_{**f**} **(J/g)** |
| **8** | **59.7** | **40.3** | **2.53** | **2.7** | **29.6** | **0.3** |
| **9** | **52.4** | **47.6** | **n.d.** | **n.d.** | **35** | **0.4** |
| **10** | **65.5** | **34.5** | **1.4** | **"** | **40** | **13.2** |
| **11 (Comp.)** | **72.1** | **27.9** | **2.28** | **"** | **57.7** | **4** |
| **12** | **61.5** | **38.5** | **4.9** | **"** | **13.8** | **2.8** |
| **13 (Comp.)** | **70** | **30** | **9.42** | **"** | **n.d.** | **n.d.** |
| **n.d. = not determined** | | | | | | |

## Claims

1. Process for the preparation of elastomeric ethylene copolymers containing from 45 to 80% by weight of units derived from ethylene, from 20 to 55% by weight of units derived from propylene and from 0 to 15% by weight of units derived from a polyene, comprising the slurry-polymerization reaction of a mixture comprising ethylene, propylene and optionally a polyene, carried out in the presence of a catalytic system comprising a compound of a transition metal M selected from Ti, V, Zr and Hf containing at least one M-π bond, at a temperature of between 20 and 90°C, said process being characterized by the presence in the reaction medium of a saturated hydrocarbon solvent having between 5 and 9 carbon atoms and having a boiling point lower than that of cyclohexane, said hydrocarbon being present in amounts of between 5 and 60% by weight relative to the total weight of the liquid phase.

2. Process according to Claim 1, in which the amount of hydrocarbon solvent is between 10 and 50%, preferably between 15 and 40%, by weight.

3. Process according to Claim 1, in which the saturated hydrocarbon solvent is selected from the group consisting of n-pentane, isopentane, neopentane, n-hexane, isohexane, 3-methylpentane, 2,2-dimethylbutane, 2,3-dimethylbutane and cyclopentane.

4. Process according to Claim 3, in which the hydrocarbon is selected from n-hexane and n-pentane.

5. Process according to Claim 1, in which the elastomeric copolymers contain from 45 to 70%, preferably from 50 to 65%, by weight of ethylene units, from 30 to 55%, preferably from 35 to 50%, by weight of propylene units and from 1 to 10% by weight of units derived from polyenes.

6. Process according to Claim 5, in which the polyene is selected from:
(a) polyenes capable of giving unsaturated units, such as:
- unconjugated linear dienes such as trans-1,4-hexadiene, cis-1,4-hexadiene, 6-methyl-1,5-heptadiene, 3,7-dimethyl-1,6-octadiene, 11-methyl-1,10-dodecadiene;
- monocyclic diolefins such as, for example, cis-1,5-cyclooctadiene and 5-methyl-1,5-cyclooctadiene;
- bicyclic diolefins such as, for example, 4,5,8,9-tetrahydroindene and 6- and/or 7-methyl-4,5,8,9-tetrahydroindene;
- alkenyl or alkylidene norbornenes such as, for example, 5-ethylidene-2-norbornene, 5-isopropylidene-2-norbornene, exo-5-isopropenyl-2-norbornene and 5-vinyl-2-norbornene;
- polycyclic diolefins such as, for example, dicyclopentadiene, tricyclo[6.2.1.0^{2,7}]-4,9-undecadiene and the 4-methyl derivative thereof;
(b) unconjugated diolefins capable of cyclopolymerization, such as 1,5-hexadiene, 1,6-heptadiene and 2-methyl-1,5-hexadiene;
(c) conjugated dienes such as, for example, butadiene and isoprene.

7. Process according to Claim 1, in which the catalytic system also comprises a co-catalyst selected from an aluminoxane or another compound capable of forming an alkylmetal cation.

8. Process according to Claim 1, in which the compound of a transition metal M is preferably selected from those comprising at least one ligand L coordinated to the metal M with a mono- or polycyclic structure having conjugated π-electrons.

9. Process according to Claim 8, in which the compound of a transition metal M is selected from metallocene compounds having the structure:
Cp^{I}MR¹ₐR²_{b}R³_{c} (I)
Cp^{I}Cp^{II}MR¹ₐR²_{b} (II)
(Cp^{I}-Aₑ-Cp^{II})M¹R¹ₐR²_{b} (III)
in which M is Ti, V, Zr or Hf; Cp^{I} and Cp^{II}, which can be identical or different, are cyclopentadienyl groups which can be substituted;
two or more substituents on the said cyclopentadienyl groups can form one or more rings having from 4 to 6 carbon atoms;
R¹, R² and R³, which can be identical or different, are hydrogen or halogen atoms, an alkyl or alkoxy group with 1 - 20 carbon atoms, an aryl, alkylaryl or arylalkyl group with 6 - 20 carbon atoms, an acyloxy group with 1 - 20 carbon atoms, an allylic group or a substituent containing a silicon atom; A is an alkenyl bridge or has a structure selected from: 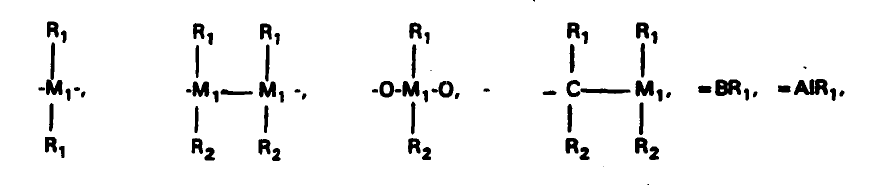 -Ge-, -Sn-, -O-, -S-, =SO, =SO₂, =NR₁, =PR₁, =P(O)R₁, in which M₁ is Si, Ge or Sn; R₁ and R₂, which can be identical or different, are alkyl groups with 1 - 4 carbon atoms or aryl groups with 6 - 10 carbon atoms;
a, b and c are, independently, integers from 0 to 4; e is an integer from 1 to 6 and two or more of the radicals R¹, R² and R³ can form a ring.

10. Process according to Claim 7, in which the aluminoxane is selected from the group consisting of linear, branched or cyclic aluminoxanes containing at least one group of the type (IV): 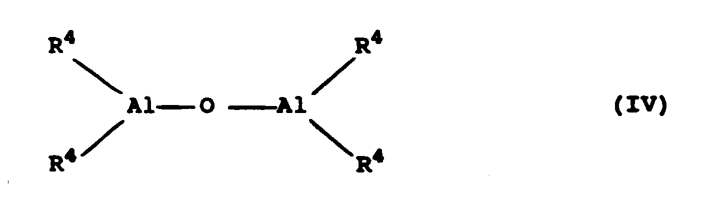 where the substituents R⁴, which can be identical or different, are a linear or branched alkyl group with 1 - 20 carbon atoms, an aryl, alkylaryl or arylalkyl group with 6 - 20 carbon atoms, an acyloxy group with 1 - 20 carbon atoms, an allylic group or a group -O-Al(R⁴)₂, and optionally certain groups R⁴ can be halogen or hydrogen atoms.

11. Process according to Claim 10, in which the aluminoxane is selected from those of formula (V): 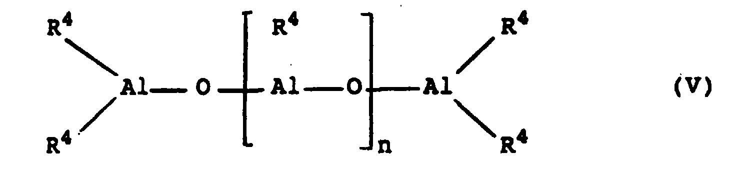 where n is 0 or an integer between 1 and 40.

12. Process according to either of Claims 10 and 11, in which the radicals R⁴ are preferably selected from methyl, ethyl, isobutyl and 2,2,4-trimethylpentyl.

13. Process according to Claim 7, in which the co-catalyst is selected from compounds which can be obtained by reaction between alkylaluminiums or alkylaluminium hydrides of formula AlH_{z}R⁴_{3-z}, where z is from 0 to 2, and water in a molar ratio of between 1:1 and 100:1 respectively.

14. Process according to Claim 1, in which the polymerization temperature is between 30°C and 80°C and preferably between 40°C and 60°C.

15. Process for the preparation of elastomeric ethylene copolymers containing from 45 to 80% by weight of units derived from ethylene, from 20 to 55% by weight of units derived from propylene and from 0 to 15% by weight of units derived from a polyene, this process comprising the slurry-polymerization reaction of a mixture comprising ethylene, propylene and optionally smaller proportions of at least one polyene, at a temperature of between 20 and 90°C in the presence of a catalytic system comprising the product of the reaction between:
(A) ethylenebis(4,5,6,7-tetrahydroindenyl)zirconium dichloride, and
(B) a compound selected from tetraisobutyldialuminoxane (TIBAO), tetra-2,2,4-trimethylpentyldialuminoxane (TIOAO) or the product of the reaction between triisobutylaluminium (TIBAL) or tri-2,2,4-trimethyl-pentylaluminium and water;
the said process being characterized by the presence, in the reaction medium, of a saturated hydrocarbon selected from n-pentane and n-hexane in amounts of between 10 and 40% by weight relative to the total weight of the liquid phase.
